# EUROPEAN PATENT APPLICATION

(11) **EP 2 725 349 A1**
(43) Date of publication of application: **30.04.2014**
(21) Application number: 12803180.4
(22) Date of filing: 18.06.2012
(51) Int. Cl.: G01N 21/89, G01N 21/23, G01N 21/892, A23L 1/16

(54) **DEVICE FOR PREDICTING CRACK GENERATION IN DRY NOODLES AND CLASSIFICATION SYSTEM**

(30) Priority: 22.06.2011 JP 2011138100
(71) Applicant: Nisshin Seifun Group Inc., Chiyoda-ku Tokyo 101-8441 (JP)
(72) Inventor: HIGUCHI Masahiro, Fujimino-city Saitama 356-8511 (JP); YOSHIDA Satoshi, Hikone-City Shiga 522-8533 (JP)
(74) Representative: Dossmann, Gérard
(86) International application number: PCT/JP2012/065508
(87) International publication number: WO 2012/176734

(57) **Abstract**

The device for predicting crack generation in dry noodles is equipped with: a light source that irradiates polarized light on the dry noodles; an image pickup unit that acquires a phase difference image of the dry noodles based on the light passing through the dry noodles as a result of the polarized light irradiated from the light source; and a predicting unit that measures the birefringence phase difference of the dry noodles based on the phase difference image acquired by the image pickup unit and evaluates the residual stress in the dry noodles from the measured birefringence phase difference to predict whether or not cracks will occur in the dry noodles.

## Description

### TECHNICAL FIELD

The present invention relates to a crack generation predictor for dried noodles, in particular, to an apparatus for predicting generation of cracks in dried noodles such as dried pasta.

The present invention also relates to a dried noodle sorting system for sorting out dried noodles which are predicted to experience crack generation.

### BACKGROUND ART

Dried noodles such as dried pasta are generally produced by extruding a noodle material with a die in which orifices of a shape corresponding to a cross section of the dried noodles is formed, and thereafter drying the extruded noodles. While the dried noodles have appropriate shapes, colors, etc. for their respective noodle types, defective products with deformation, color unevenness or the like due to various causes can be produced when dried noodles are large-scale produced on a production line.

Accordingly, inspection apparatuses for checking appearance of the produced dried noodles have been used to improve quality of the products to be shipped from the manufacturing plant. For instance, Patent Literature 1 discloses an inspection apparatus which obtains color images of instant noodles to inspect abnormalities in their shapes and colors, and Patent Literature 2 discloses an apparatus which images pasta with a charge-coupled device (CCD) camera to detect pasta with color abnormalities.

### CITATION LIST

### PATENT LITERATURE

Patent Literature 1: JP 2003-35675 A
Patent Literature 2: JP 2005-324101 A

### SUMMARY OF INVENTION

### TECHNICAL PROBLEMS

As in Patent Literatures 1 and 2, it is possible to detect those with abnormal appearances among the produced dried noodles by taking optical images of dried noodles.

However, it is known that there have been some dried noodles in which cracks would generate in their axial directions over time, even if no abnormality was found in their appearances immediately after the production. Such dried noodles in which cracks would generate will be impaired in their appearance quality as commercial products, but since no cracks have generated yet immediately after their production, abnormality could not have been detected by inspecting their appearances with an apparatus like the one disclosed by Patent Literature 1 or Patent Literature 2 which is directly connected to the production line.

The present invention has been made to solve the above-described problem of the prior art and has an object of providing a crack generation predictor for predicting in advance generation of cracks in dried noodles.

In addition, the present invention has another object of providing a dried noodle sorting system for sorting out dried noodles which are predicted by such the crack generation predictor to experience crack generation.

### SOLUTION TO PROBLEMS

A crack generation predictor for dried noodles according to the present invention comprises: a light source unit which emits polarized light toward a dried noodle; an imaging unit which acquires an image of phrase difference of the dried noodle based on transmitted light through the dried noodle with respect to the polarized light emitted from the light source unit; and a predicting unit which measures an amount of birefringent phase difference of the dried noodle based on the image of phase difference acquired by the imaging unit and assesses residual stress in the dried noodle based on the measured amount of birefringent phase difference to predict generation of cracks in the dried noodle.

Preferably, the light source unit includes a halogen lamp, a circular polarization filter which converts light from the halogen lamp into circularly-polarized light, and a condenser lens which condenses the circularly-polarized light converted by the circular polarization filter onto the dried noodle, and wherein the imaging unit includes an objective lens which converts light from the dried noodle into parallel light, an elliptical polarization analyzer which analyzes elliptically-polarized light in the parallel light converted by the objective lens, and a charge-coupled device camera which acquires an image of phase difference of the dried noodle based on light transmitted through the elliptical polarization analyzer.

The predicting unit may calculate residual stress in the dried noodle in an axial direction based on the measured amount of birefringent phase difference and predict that cracks will generate in the dried noodle if the calculated residual stress exceeds a given threshold value.

A dried noodle sorting system according to the present invention comprises: a carrying section which carries dried noodles; the crack generation predictor according to any one of claims 1 to 3 which predicts crack generation in a dried noodle carried by the carrying section; and a sorting section which removes a dried noodle which is predicted to have crack generation by the crack generation predictor from the carrying section.

### ADVANTAGEOUS EFFECTS OF INVENTION

According to the present invention, since the imaging unit acquires an image of phase difference of a dried noodle, and the predicting unit measures an amount of birefringent phase difference of the dried noodle based on the image of phase difference and assesses residual stress in the dried noodle based on the amount of birefringent phase difference, it becomes possible to predict generation of cracks in dried noodles in advance.

### BRIEF DESCRIPTION OF DRAWINGS

[FIG. 1] FIG. 1 is a block diagram illustrating a structure of a crack generation predictor for dried noodles according to Embodiment 1 of the invention.
[FIG. 2] FIG. 2 is a diagram schematically illustrating a relationship between residual stress and birefringence.
[FIG. 3A] FIG. 3A is a photograph showing an image of phase difference of pasta in which no crack generated over time.
[FIG. 3B] FIG. 3B is a photograph showing an optical microscope image of pasta in which no crack generated over time.
[FIG. 4A] FIG. 4A is a photograph showing an image of phase difference of pasta in which cracks have generated over time.
[FIG. 4B] FIG. 4B is a photograph showing an optical microscope image of pasta in which cracks have generated over time.
[FIG. 5] FIG. 5 is a block diagram illustrating a structure of a dried noodle sorting system according to Embodiment 2 of the invention.

### DESCRIPTION OF EMBODIMENTS

The present invention is described in detail below based on the preferred embodiments illustrated in the accompanying drawings.

### Embodiment 1

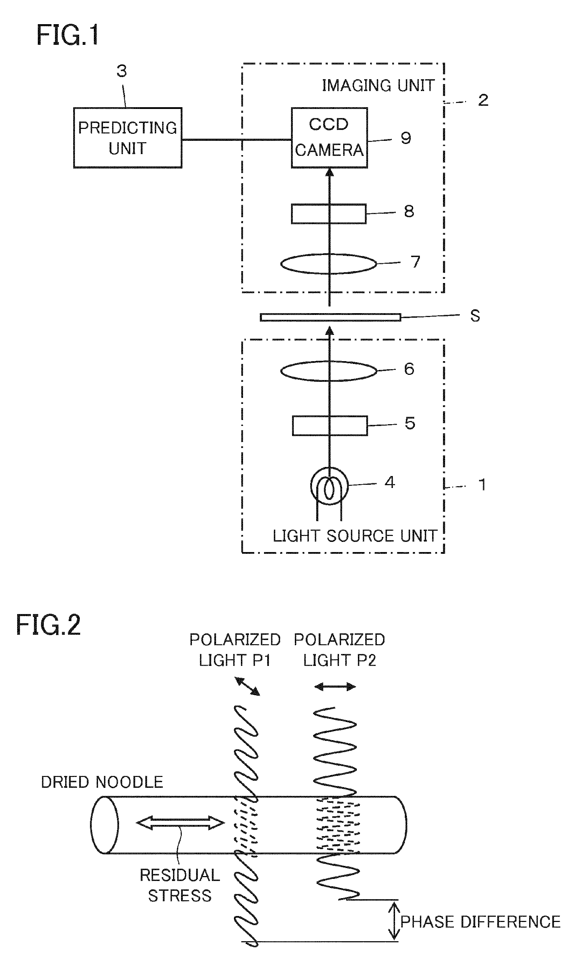

FIG. 1 illustrates a structure of a crack generation predictor for dried noodles according to Embodiment 1 of the invention. The crack generation predictor includes a light source unit 1 arranged to be opposed to a specimen S comprising a dried noodle, and an imaging unit 2 arranged to be opposed to the light source unit 1 across the specimen S. In addition, the imaging unit 2 is connected to a predicting unit 3.

The light source unit 1 is to emit circularly-polarized light toward the specimen S and includes a halogen lamp 4, a circular polarization filter 5 for converting light emitted from the halogen lamp 4 into circularly-polarized light, and a condenser lens 6 for collecting circularly-polarized light converted by the circular polarization filter 5 onto the specimen S. The circular polarization filter 5 may be formed by disposing an interference filter, a polarizer and a quarter-wave plate in order on an optical axis.

The imaging unit 2 acquires an image of phase difference of the specimen S based on transmitted light through the specimen S of circularly-polarized light emitted from the light source unit 1 and includes an objective lens 7 for converting light which has transmitted through the specimen S into parallel light, an elliptical polarization analyzer 8 for analyzing elliptically-polarized light in parallel light that was converted by the objective lens 7, and a CCD camera 9 for acquiring an image of phase difference of the specimen S using transmitted light through the elliptical polarization analyzer 8. The elliptical polarization analyzer 8 is formed of a liquid crystal optical device and an analyzer disposed on the optical axis.

The predicting unit 3 measures an amount of birefringent phase difference of the specimen S based on the image of phase difference acquired by the imaging unit 2 and assesses residual stress in the specimen S based on the measured amount of birefringent phase difference, to thereby predict generation of cracks in the specimen S.

As a result of various experiments and studies, the inventors of the present invention have discovered that, when producing dried noodles such as pasta by extruding the noodle material through nozzles formed in a die, as illustrated in FIG. 2, stress applied on a dried noodle in its axial direction remains in the dried noodle as residual stress, and if the residual stress is larger than a given level, cracks are highly likely to generate over time.

It is known that, in general, even an optically isotropic substance would exhibit birefringence if subjected to stress in one direction, decreasing the speed of light having a vibration component in the direction in which the stress was applied. Hence, as illustrated in Fig. 2, if polarized light P1 having a plane of vibration orthogonal to the axial direction of a dried noodle and polarized light P2 having a plane of vibration in the axial direction are caused to enter a dried noodle having residual stress in the axial direction thereof, the propagating speed of polarized light P2 within the dried noodle becomes slower than the propagating speed of polarized light P1 in accordance with the magnitude of residual stress, creating phase difference between polarized light P1 and polarized light P2 which have transmitted through the dried noodle.

Accordingly, the inventors of the present invention have arrived at the idea that by emitting circularly-polarized light from the light source unit 1 toward the specimen S, analyzing elliptically polarized light which has transmitted through the specimen S to acquire an image of phase difference by the imaging unit 2, and measuring an amount of birefringent phase difference of the specimen S based on the image of phase difference to assess the magnitude of residual stress in the specimen S by the predicting unit 3 like in the crack generation predictor according to Embodiment 1, it is possible to predict later generation of cracks.

Next, described is an operation of the crack generation predictor for dried noodles illustrated in FIG. 1.

First, light emitted from the halogen lamp 4 of the light source unit 1 is converted to circularly-polarized light by the circular polarization filter 5 and is also condensed through the condenser lens 6 to illuminate the specimen S. Light transmitted through the specimen S is converted into parallel light by the objective lens 7 and thereafter arrives at the CCD camera 9 via the elliptical polarization analyzer 8. In this way, an image of phase difference in which phase difference generating when light transmits through the specimen S due to birefringence of the specimen S is converted into contrast is acquired by the CCD camera 9.

Image data of phase difference is sent from the CCD camera 9 to the predicting unit 3, whereby an amount of birefringent phase difference of the specimen S is measured based on the image data of phase difference, and a magnitude of residual stress in the specimen S is assessed based on the thus measured amount of birefringent phase difference. Further, the predicting unit 3 compares the assessed magnitude of residual stress with a given threshold value which is preliminarily set, and if the magnitude of residual stress is equal to or smaller than the threshold value, the predicting unit 3 predicts that cracks would not generate in the specimen S, while if the magnitude of the residual stress exceeds the threshold value, the predicting unit 3 predicts that cracks would generate in the specimen S.

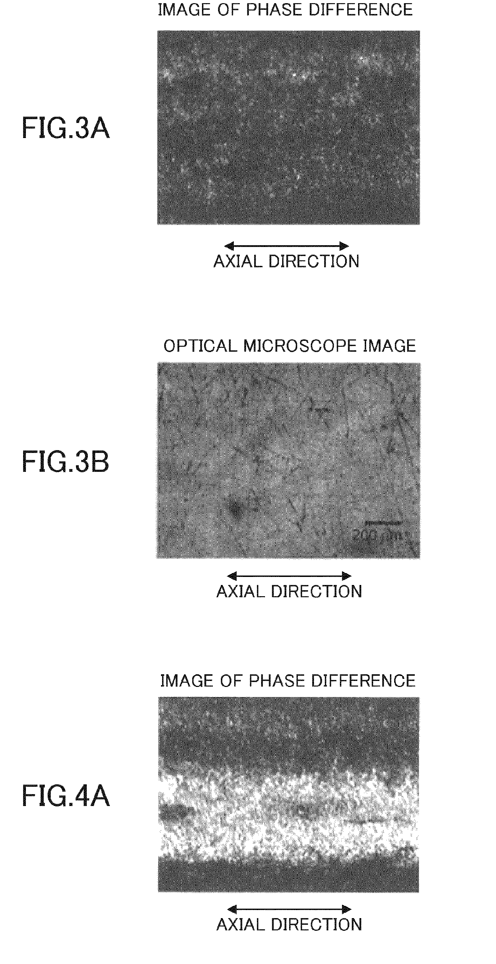

FIGS. 3A and 4A illustrate images of phase difference of two specimens S, one being pasta in which no cracks have generated over time since its production, and the other being another pasta in which cracks have generated after its production, respectively acquired by the imaging unit 2.

FIG. 3A illustrates an image of phase difference of pasta in which no cracks generated, and FIG. 3B illustrates an optical microscope image taken for the purpose of reference. There is no sign of exhibiting birefringence in the image of phase difference, and no specific abnormality is seen also in the optical microscope image.

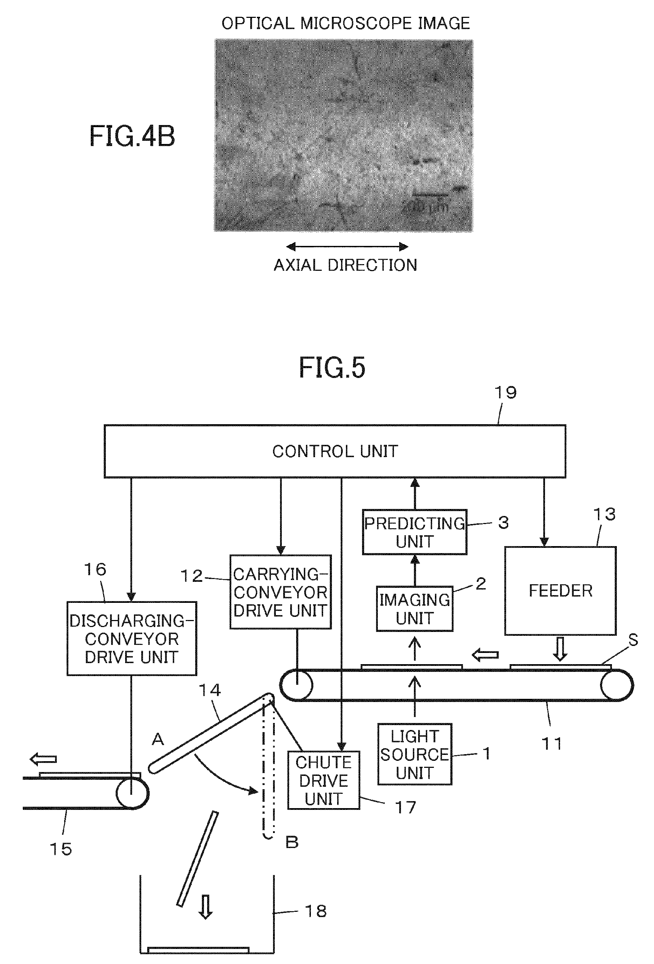

On the other hand, FIG. 4A illustrates an image of phase difference of pasta in which cracks have generated over time, and FIG. 4B illustrates an optical microscope image thereof. In the image of phase difference, a belt-like portion with clearly different contrast in the axial direction can be confirmed, while it is not clearly shown in the optical microscope image. It appears that presence of residual stress along the axial direction causes birefringence between the belt-like portion and the rest portion, producing the contrast difference. Such residual stress leads to generation of cracks.

As described above, since the imaging unit 2 acquires an image of phase difference of the specimen S, and the predicting unit 3 measures an amount of birefringent phase difference of the specimen S based on the image of phase difference and assesses residual stress in the specimen S based on the amount of birefringent phase difference, it becomes possible to predict generation of cracks in the specimen S in advance.

An amount of birefringent phase difference may vary depending on a thickness of a specimen S through which polarized light transmits. Hence, for a specimen S having a different thickness, it is preferable to accordingly adjust the given threshold value to be compared with a magnitude of residual stress.

### Embodiment 2

FIG. 5 illustrates a structure of a dried noodle sorting system according to Embodiment 2. The sorting system includes a carrying conveyor 11 for carrying a specimen S and a carrying-conveyor drive unit 12 for driving the carrying conveyor 11, and a feeder 13 is provided above the carrying conveyor 11 to feed specimens S onto the carrying conveyor 11 one by one. The crack generation predictor for dried noodles described in Embodiment 1 is provided downstream of the feeder 13 in the carrying direction of the carrying conveyor 11. The light source unit 1 of the crack generation predictor is located beneath the carrying conveyor 11, while the imaging unit 2 is provided above the carrying conveyor 11 so as to be opposed to the light source unit 1 and is connected to the predicting unit 3.

The conveyor belt of the carrying conveyor 11 is made of a material which is so translucent as to allow light from the light source unit 1 to transmit therethrough and is optically isotropic.

A chute 14 which is inclined such that a specimen S placed thereon slides down is provided downstream of the carrying conveyor 11, and further a discharging conveyor 15 for discharging the specimens S as commercial products is provided downstream of the chute 14 and is connected to a discharging-conveyor drive unit 16.

The chute 14 is rotatably attached so as to be able to increase its inclination and is connected to a chute drive unit 17 for rotating the chute 14, and a collecting unit 18 for collecting specimens S which have been determined to have abnormalities is arranged beneath the chute 14.

The predicting unit 3 of the crack generation predictor, the carrying-conveyor drive unit 12, the feeder 13, the discharging-conveyor drive unit 16 and the chute drive unit 17 are connected to a control unit 19.

The carrying conveyor 11, the carrying-conveyor drive unit 12, the discharging conveyor 15 and the discharging-conveyor drive unit 16 constitute a carrying section, while the chute 14 and the chute drive unit 17 constitute a sorting section.

The control unit 19 first controls the chute drive unit 17 such that the chute 14 is kept in a rotation position A at which the chute 14 almost joins the downstream end of the carrying conveyor 11 and the upstream end of the discharging conveyor 15 as shown in a solid line in FIG. 5, and also under the control of the control unit 19, the carrying conveyor 11 and the discharging conveyor 15 are driven respectively by the carrying-conveyor drive unit 12 and the discharging-conveyor drive unit 16.

In such a state, the feeder 13 feeds each specimen S onto the carrying conveyor 11. The specimen S is carried by the carrying conveyor 11 and arrives at the position immediately above the light source unit 1 of the crack generation predictor, where polarized light emitted from the light source unit 1 illuminates the specimen S via the conveyor belt having translucent properties, the imaging unit 2 acquires an image of phase difference, and the predicting unit 3 assesses residual stress in the specimen S to predict generation of cracks in the specimen S.

The prediction result in the predicting unit 3 is outputted to the control unit 19, and the control unit 19 controls such that a specimen S which is predicted to have no crack generation over time is carried from the carrying conveyor 11 to the discharging conveyor 15, via the chute 14 kept unrotated. That is, the specimen S is carried from the downstream end of the carrying conveyor 11 onto the chute 14 which is kept at the rotation position A, slides down the upper surface of the chute 14 to reach the upstream end of the discharging conveyor 15, and is discharged by the discharging conveyor 15.

On the other hand, when a specimen S which is predicted to have crack generation over time, the control unit 19 causes the chute drive unit 17 to rotate the chute 14 to a rotation position B shown in a broken line in FIG. 5. In this way, the specimen S does not reach the upstream end of the discharging conveyor 15 from the downstream end of the carrying conveyor 11 and is collected as a defective product in the collecting unit 18 arranged beneath the chute 14.

After the specimen S which is predicted to have crack generation falls in the collecting unit 18, the chute 14 is brought back to the rotation position A by the chute drive unit 17.

As described above, only specimens S which are predicted to experience no crack generation can be discharged from the discharging conveyor 15, while specimens S which are predicted to have crack generation can be collected in the collecting unit 18.

The crack generation predictor for dried noodles and the dried noodle sorting system according to the present invention can be used for pasta such as spaghetti and also a wide variety of dried noodles including Japanese buckwheat noodles, Japanese wheat noodles and Chinese-style noodles.

### REFERENCE SIGNS LIST

- 1: light source unit
- 2: imaging unit
- 3: predicting unit
- 4: halogen lamp
- 5: circular polarization filter
- 6: condenser lens
- 7: objective lens
- 8: elliptical polarization analyzer
- 9: CCD camera
- 11: carrying conveyor
- 12: carrying-conveyor drive unit
- 13: feeder
- 14: chute
- 15: discharging conveyor
- 16: discharging-conveyor drive unit
- 17: chute drive unit
- 18: collecting unit
- 19: control unit
- S: specimen

## Claims

1. A crack generation predictor for dried noodles comprising:
a light source unit which emits polarized light toward a dried noodle;
an imaging unit which acquires an image of phrase difference of the dried noodle based on transmitted light through the dried noodle with respect to the polarized light emitted from the light source unit; and
a predicting unit which measures an amount of birefringent phase difference of the dried noodle based on the image of phase difference acquired by the imaging unit and assesses residual stress in the dried noodle based on the measured amount of birefringent phase difference to predict generation of cracks in the dried noodle.

2. The crack generation predictor for dried needles according to claim 1, wherein the light source unit includes a halogen lamp, a circular polarization filter which converts light from the halogen lamp into circularly-polarized light, and a condenser lens which condenses the circularly-polarized light converted by the circular polarization filter onto the dried noodle, and
wherein the imaging unit includes an objective lens which converts light from the dried noodle into parallel light, an elliptical polarization analyzer which analyzes elliptically-polarized light in the parallel light converted by the objective lens, and a charge-coupled device camera which acquires an image of phase difference of the dried noodle based on light transmitted through the elliptical polarization analyzer.

3. The crack generation predictor for dried noodles according to claim 1 or 2, wherein the predicting unit calculates residual stress in the dried noodle in an axial direction based on the measured amount of birefringent phase difference and predicts that cracks will generate in the dried noodle if the calculated residual stress exceeds a given threshold value.

4. A dried noodle sorting system comprising:
a carrying section which carries dried noodles;
the crack generation predictor according to any one of claims 1 to 3 which predicts crack generation in a dried noodle carried by the carrying section; and
a sorting section which removes a dried noodle which is predicted to have crack generation by the crack generation predictor from the carrying section.
